# EUROPÄISCHE PATENTSCHRIFT

(11) **EP 3 889 078 B1**
(45) Veröffentlichungstag und Bekanntmachung des Hinweises auf die Patenterteilung: **11.12.2024**
(21) Anmeldenummer: 21000067.5
(22) Anmeldetag: 08.03.2021
(51) Int. Cl.: B65G 29/00

(54) **EINRICHTUNG ZUM SAMMELN VON MILCHPROBEFLASCHEN**
DEVICE FOR COLLECTING MILK SAMPLE BOTTLES
DISPOSITIF DE COLLECTE DES BOUTEILLES D'ÉCHANTILLONS DE LAIT

(30) Priorität: 11.03.2020 DE 102020001715
(43) Veröffentlichungstag der Anmeldung: 06.10.2021
(73) Patentinhaber: Bartec Benke GmbH, 94239 Gotteszell (DE)
(72) Erfinder: KAPPL, Gerhard Alois, 94239 Zachenberg (DE); LERACH, Dieter, 94227 Zwiesel (DE)
(74) Vertreter: Kohl, Karl-Heinz

(56) Entgegenhaltungen:
- EP-B1- 1 105 328
- FR-A1- 2 528 015
- GB-A- 2 110 624
- US-A- 5 029 695

## Beschreibung

Die Erfindung betrifft eine Einrichtung zum Sammeln von Milchprobeflaschen nach dem Oberbegriff des Anspruches 1.

Solche Einrichtungen sind auf Milchsammelfahrzeugen mit einer automatischen Probeflaschenabfüllung im Einsatz.

Bei bekannten Einrichtungen kommen zwei Rundmagazine zum Einsatz.

Ein solches Rundmagazin kann bis zu 72 leere Probeflaschen enthalten. Sie werden über einen Probeflaschentransport zu einer Probenflaschenabfüllposition geführt und nach durchgeführter Probenahme in das zweite leere Rundmagazin transportiert. Nach Fertigstellung der Milchsammeltour befinden sich in dem einen Rundmagazin bis zu 72 mit Milchproben gefüllte Milchprobenflaschen. Dieses Rundmagazin wird an Milchprüflabore übergeben, welche die Milchproben optimaler Weise vollautomatisiert analysieren.

Es sind auch einfachere Einrichtungen bekannt, die beispielsweise nur 16 Milchprobeflaschen enthalten. Da für den Transport zu den Milchprüflaboren nach wie vor Probeflaschenrundmagazine verwendet werden und in den Milchprüflaboren auch für einen automatisierten Ablauf verwendet werden müssen, tritt das Problem auf, dass die gefüllten Milchprobeflaschen am Ende der Milchsammeltour von Hand in das Rundmagazin einsortiert werden müssen Weitere Einrichtungen sind z.B. aus der GB 2 110 624 A und der US 5,029,695 A bekannt. Bei diesen Einrichtungen kann automatisiert beschickt werden, sie weisen jedoch einen relativ hohen Platzbedarf auf.

Der Erfindung liegt die Aufgabe zugrunde, die gattungsgemäße Einrichtung so auszubilden, dass sie bei nur geringem Platzbedarf eine automatische Einsortierung in das Magazin ermöglicht.

Diese Aufgabe wird bei der gattungsgemäßen Einrichtung erfindungsgemäß mit den kennzeichnenden Merkmalen des Anspruches 1 gelöst.

Das Magazin der erfindungsgemäßen Einrichtung ist so ausgebildet, dass die im Aufnahmeraum befindlichen Milchprobeflaschen über den Auslass ausgeschleust und mit der Milchprobe gefüllt werden können. Zur Identifikation der Milchprobe wird hierbei auf die Milchprobeflasche ein Barcode oder ein Transponder aufgebracht, der die in der Probeflasche enthaltene Milch hinsichtlich Zeit, Ort und dgl. kennzeichnet. Anschließend werden die gefüllten und gekennzeichneten Milchprobeflaschen über den Einlass zurück in den Aufnahmeraum des Magazins gefördert. Da der Einlass und der Auslass des Magazins gegeneinander gesperrt sind, können die Milchprobeflaschen ohne gegenseitige Behinderung durch den Einlass eingeschleust und durch den Auslass aus dem Aufnahmeraum des Magazins herausgeführt werden. Da nur ein Magazin vorhanden ist, kann die Einrichtung sehr kompakt ausgebildet sein, so dass sie auch an Sammelfahrzeugen vorgesehen sein kann, bei denen nur ein kleiner Einbauraum für die Einrichtung zur Verfügung steht.

Die Milchprobeflaschen können nacheinander durch den Auslass aus dem Aufnahmeraum des Magazins herausgeführt und zu einer Identifikations- und Abfüllposition transportiert werden. Anschließend kann die so befüllte und gekennzeichnete Milchprobeflasche über den Einlass wieder zurück in den Aufnahmeraum transportiert werden.

Vorteilhaft ist der Auslass mit einer Führung versehen, mit dem das Ausschleusen der Milchprobeflasche aus dem Aufnahmeraum erleichtert wird. Die Milchprobeflasche kann zuverlässig dem Magazin entnommen und zur Identifikation und Abfüllung weitertransportiert werden.

Die Führung des Auslasses sorgt in vorteilhafter Weise dafür, dass die ausgeschleuste Milchprobeflasche nicht in Kontakt mit der durch den Einlass eingeschleusten, mit Milch gefüllten und identifizierten Milchprobeflasche gelangt.

Eine vorteilhafte Ausführungsform ergibt sich, wenn der Aufnahmeraum des Magazins ringförmig ausgebildet ist. Dann kann auf kleinem Raum eine gro-βe Zahl von Milchprobeflaschen im Magazin untergebracht werden.

Vorteilhaft ist bei der ringförmigen Gestaltung des Aufnahmeraumes, wenn er von zwei koaxialen Ringwänden begrenzt ist.

Die radiale Breite des ringförmigen Aufnahmeraumes entspricht etwa dem Durchmesser der Milchprobeflasche, die auf diese Weise zwischen den beiden Ringwänden einwandfrei geführt ist.

Im Aufnahmeraum sind die Milchprobeflaschen derart hintereinander angeordnet, dass sie vorteilhaft aneinander liegen. Dadurch wird der ringförmige Aufnahmeraum optimal genutzt.

Die Milchprobeflaschen stehen vorteilhaft auf einem drehbar angetriebenen Boden auf, der gegenüber den beiden Ringwänden drehbar ist. Mittels des Bodens werden die Milchprobeflaschen innerhalb des Aufnahmeraumes transportiert.

Der Auslass des Magazins ist vorteilhaft in der äußeren Ringwand vorgesehen. Der Auslass wird durch eine Öffnung in der äußeren Ringwand gebildet, durch die die Milchprobeflasche aus dem Aufnahmeraum herausbewegt und zur Identifikations- und Abfüllposition transportiert werden kann.

Vorteilhaft ist auch der Einlass für die befüllten und identifizierten Milchprobeflaschen in der äußeren Ringwand vorgesehen.

Der Aufnahmeraum kann auch eckigen Umriss haben.

In diesem Falle wird der Aufnahmeraum in vorteilhafter Weise von einem rechteckigen Rahmen begrenzt.

Um die Milchprobeflaschen im Aufnahmeraum zuverlässig transportieren zu können, befindet sich im Aufnahmeraum in vorteilhafter Weise wenigstens eine Trennwand. Durch sie wird der Aufnahmeraum in wenigstens zwei Aufnahmeraum-Abschnitte unterteilt. Die Milchprobeflaschen befinden sich in diesen Aufnahmeraum-Abschnitten.

Um eine optimale Nutzung des Aufnahmeraumes zu erreichen, sind die Aufnahmeraum-Abschnitte in vorteilhafter Weise an beiden Enden der Trennwand miteinander verbunden. Somit können die Milchprobeflaschen am Ende der Trennwand vom einem Aufnahmeraum-Abschnitt in den anderen Aufnahmeraum-Abschnitt transportiert werden.

Am anderen Ende der Trennwand befindet sich vorteilhaft der Auslass, der so gestaltet ist, dass er vom Einlass getrennt bzw. ihm gegenüber gesperrt ist. Darum können die Milchprobeflaschen auch bei dieser rechteckigen Ausbildung des Aufnahmeraumes gleichzeitig ein- und ausgeschleust werden, ohne dass die Milchprobeflaschen einander behindern.

Die erfindungsgemäße Einrichtung ist in vorteilhafter Weise so ausgebildet, dass dem Magazin wenigstens ein Transportsystem zugeordnet ist, um die Milchprobeflaschen in den Aufnahmeraum einzuschleusen.

Das Transportsystem befindet sich bevorzugt in unmittelbarer Nähe des Magazins, insbesondere in unmittelbarer Nähe des Ein- und des Auslasses. Daher müssen die Milchprobeflaschen nur sehr kurze Wege zurücklegen, um aus dem Magazin ausgeschleust bzw. in das Magazin eingeschleust zu werden.

Ein einfacher Transport der Milchprobeflaschen beim Ein- und Ausschleusen ergibt sich, wenn das Transportsystem einen Schieber zum Einschleusen und einen Schieber zum Abtransport der ausgeschleusten Milchprobeflaschen aufweist. Mittels des Schiebers können die Milchprobeflaschen zuverlässig transportiert werden.

Vorteilhaft ist der Schieber mit einer Aufnahme für die Milchprobeflasche versehen. Diese Aufnahme ist so gestaltet, dass die Milchprobeflasche beim Transport nicht umfallen kann.

Bevorzugt kann der Schieber so ausgebildet sein, dass sein Boden eine Vertiefung aufweist, in welche die Milchprobeflasche gestellt wird. Der Durchmesser der Vertiefung entspricht dann etwa dem Außendurchmesser des Bodenbereiches der Milchprobeflasche.

Die Schieber müssen keine große Höhe haben. Es reicht aus, wenn sie nur so hoch sind, dass die in die Schieber gestellte Milchprobeflasche nicht umfallen kann.

Zum Transport der Milchprobeflaschen im Aufnahmeraum des Magazins ist ein Antrieb vorgesehen, mit dem der Boden des Aufnahmeraumes drehbar angetrieben werden kann.

Der Boden des Aufnahmeraumes ist so ausgebildet, dass die Milchprobeflaschen im Aufnahmeraum auf dem Boden aufstehen.

Der Anmeldungsgegenstand ergibt sich nicht nur aus dem Gegenstand der einzelnen Patentansprüche, sondern auch durch alle in den Zeichnungen und der Beschreibung offenbarten Angaben und Merkmale. Sie werden, auch wenn sie nicht Gegenstand der Ansprüche sind, als erfindungswesentlich beansprucht, soweit sie einzeln oder in Kombination gegenüber dem Stand der Technik neu sind.

Weitere Merkmale der Erfindung ergeben sich aus den weiteren Ansprüchen, der Beschreibung und den Zeichnungen.

Die Erfindung wird anhand einer in den Zeichnungen 1-7 dargestellter Ausführungsform näher erläutert. Die Zeichnungen 8-12 zeigen eine nicht erfindungsgemäße Ausführungsform. Es zeigen
- Fig. 1: in Vorderansicht eine erste Ausführungsform einer erfindungsge-mäßen Einrichtung,
- Fig. 2: eine Ansicht in Richtung des Pfeiles II in Fig. 1,
- Fig. 3: eine Ansicht in Richtung des Pfeiles III in Fig. 1,
- Fig. 4: eine Rückansicht der erfindungsgemäßen Einrichtung,
- Fig. 5: eine Draufsicht auf die erfindungsgemäße Einrichtung,
- Fig. 6: eine Unteransicht der erfindungsgemäßen Einrichtung,
- Fig. 7: die erfindungsgemäße Einrichtung in perspektivischer Darstellung,
- Fig. 8: eine Draufsicht auf eine nicht erfindungsgemäße Einrichtung,
- Fig. 9: eine Ansicht in Richtung des Pfeiles IX in Fig. 8,
- Fig. 10: eine Ansicht in Richtung des Pfeiles X in Fig. 8,
- Fig. 11: eine Ansicht in Richtung des Pfeiles XI in Fig. 8,
- Fig. 12: die Einrichtung gemäß Fig. 8 in perspektivi-scher Darstellung.

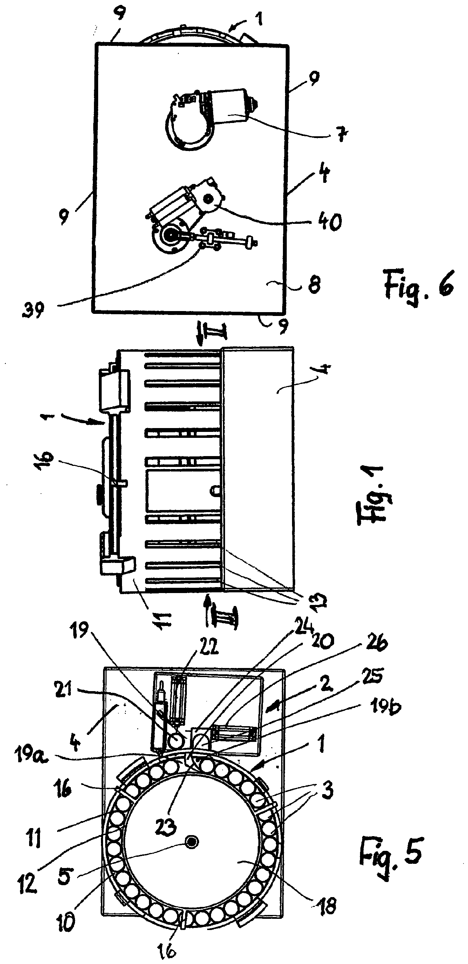

Die Einrichtung gemäß den Fig. 1 bis 7 hat ein Magazin 1, das bei dieser Ausführungsform als Rundmagazin ausgebildet ist. Dem Magazin 1 ist ein Transportsystem 2 zugeordnet, mit dem Probeflaschen 3 dem Magazin 1 entnommen sowie ihm zugeführt werden können.

Die Einrichtung befindet sich auf Milchsammelfahrzeugen, mit denen Milch von den Produktionsbetrieben abgeholt wird. Für die vom jeweiligen Produktionsbetrieb gelieferte Milch wird in die Probeflasche 3 eine Milchprobe eingefüllt, die später in einem Milchprüflabor geprüft wird.

Die Einrichtung hat einen Träger 4, auf dem das Magazin 1 und das Transportsystem 2 angeordnet sind.

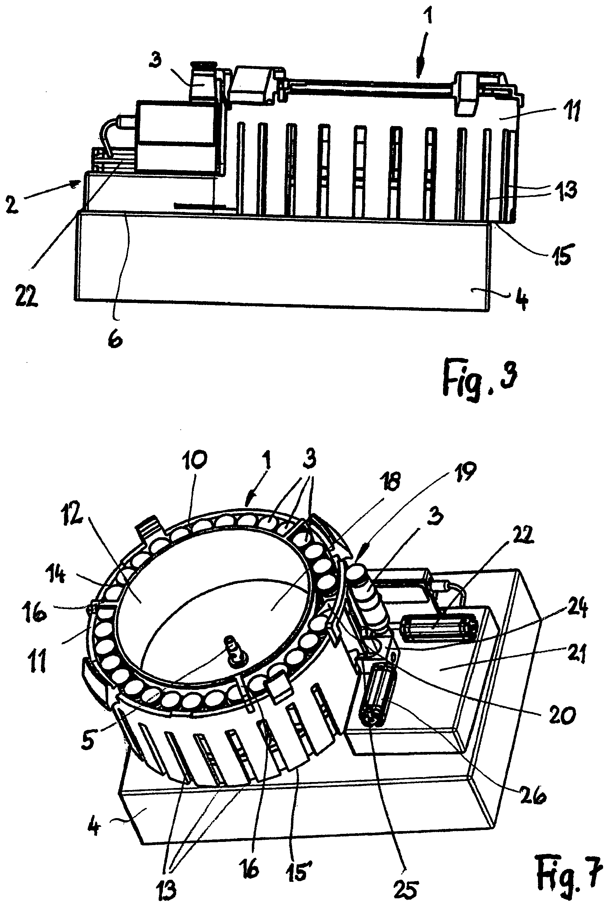

Das Magazin 1 hat einen um eine senkrecht zur Trägeroberseite liegende Achse drehbar antreibbaren Boden 18 (Fig. 5 und 7). Der Boden 18 sitzt drehfest auf einer Achse 5. Sie ragt durch eine obere Trägerwand 6 nach oben. Unterhalb der Trägerwand 6 ist die Achse 5 mit einem entsprechenden Antrieb 7 verbunden (Fig. 6), mit dem die Achse 5 drehbar angetrieben wird.

Der Antrieb 7 ist in einer Aufnahme 8 untergebracht, die in Richtung auf das Magazin 1 durch die Trägerwand 6 begrenzt ist. An den Rand der Trägerwand 6 schließen Seitenwände 9 an, die die Aufnahme 8 seitlich begrenzen. Die Seitenwände 9 sind gleich hoch und schützen in der Einbaulage der Einrichtung den in der Aufnahme 8 untergebrachten Antrieb 7. Die Aufnahme 8 ist im Ausführungsbeispiel auf ihrer der Trägerwand 6 gegenüberliegenden Seite offen. Dadurch ist leichter Zugang zum Antrieb 7 möglich, falls er repariert, gewartet oder ausgetauscht werden muss. Die Aufnahme 8 kann selbstverständlich durch einen Boden geschlossen sein.

In der Aufnahme 8 sind ferner eine Hubeinheit 39 zum Anheben der Probeflaschen 3 und ein Antriebsmotor 40 für eine (nicht dargestellte) Flaschendrehbox untergebracht. Die Probeflaschen 3 können somit gedreht werden, um an ihrer Außenseite angebrachte Barcodes mittels eines Barcode-Lesegerätes sicher erfassen zu können.

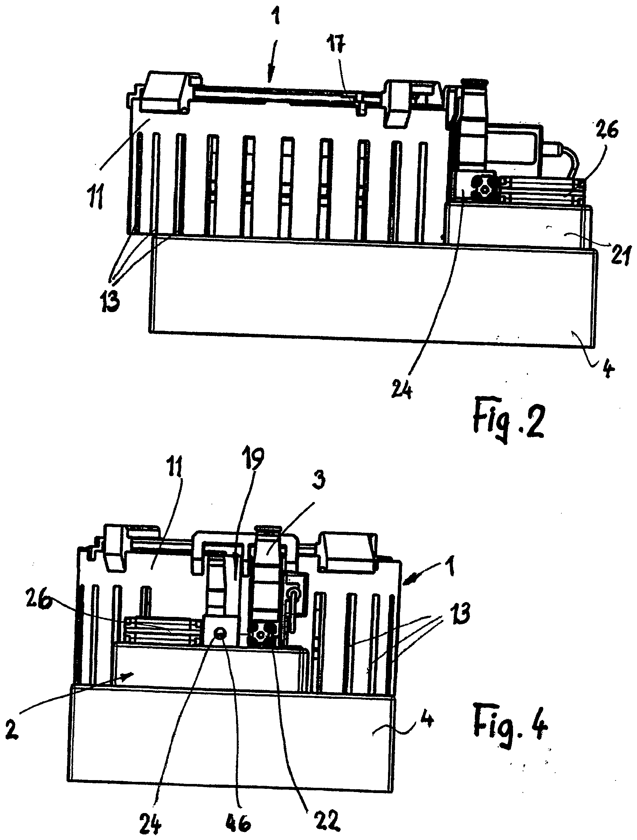

Mit der vorzugsweise pneumatisch arbeitenden Hubeinheit 39 können die Probeflaschen 3 in eine Abfüllposition angehoben werden (vgl. Fig 2 bis 4 und 7).

Das Magazin 1 hat einen ringförmigen Aufnahmeraum 10 für die Probeflaschen 3. Er wird durch zwei koaxial zueinander liegende Ringwände 11, 12 in Radialrichtung begrenzt. Der Abstand zwischen den beiden Ringwänden 11, 12 entspricht im Wesentlichen dem Durchmesser der Probeflaschen 3, so dass diese im Aufnahmeraum 10 zuverlässig gegen Umkippen gesichert sind.

Die äußere Ringwand 11 weist über den größten Teil ihres Umfanges parallel zur Drehachse 5 liegende und mit Abstand voneinander angeordnete Schlitze 13 auf, die mit Abstand vom oberen Rand 14 der Ringwand 11 enden und sich bis zum unteren Rand 15 der Ringwand 11 erstrecken. Die Schlitze 13 dienen der Material- und Gewichtsersparnis.

Vorteilhaft sind die beiden Ringwände 12, 13 über Querstege 16 miteinander verbunden. Sie befinden sich am oberen Rand der beiden Ringwände 11, 12. Die Stege 16 sind vorteilhaft einstückig mit der inneren Ringwand 12 verbunden und erstrecken sich über den Aufnahmeraum 10 hinweg bis zur äußeren Ringwand 11. Das freie Ende 17 der Stege 16 ist rechtwinklig abgewinkelt und liegt an der Außenseite der äußeren Ringwand 11 an. Vorzugsweise ist das freie Stegende 17 fest mit der Ringwand 11 verbunden, beispielsweise verklebt.

Die Ringwände 11, 12 sind in geeigneter Weise am Träger 4 gehalten.

Beide Ringwände 11, 12 erstrecken sich senkrecht zum Boden 18, der den Aufnahmeraum 10 nach unten begrenzt. Die Probeflaschen 3 stehen im Aufnahmeraum 10 auf dem Boden 18.

Das Magazin 1 hat einen Ein/Ausschleusebereich 19, über den die Probeflaschen 3 dem Magazin 1 übergeben bzw. ihm entnommen werden.

Der Einschleusebereich 19a wird durch einen Verschlussbügel 20 vom Ausschleusebereich 19b getrennt (Fig. 5). Mit dem Transportsystem 2 werden die Probeflaschen 3 dem Magazin 1 zugeführt. Außerdem dient das Transportsystem zum Transport der Probeflasche 3 zu einer Identifikations- und Abfüllposition 21 (Fig. 5 und 7).

Zum Einschleusen der Probeflasche 3 in den Aufnahmeraum 10 des Magazins 1 ist ein vorteilhaft durch eine Kolben-Zylinder-Einheit gebildeter Antrieb 22 vorgesehen, der auf dem Träger 4 angeordnet ist und mit dem die Probeflasche 3 durch den Einschleusebereich 19a in den Aufnahmeraum 10 geschoben wird. Vorteilhaft wird die Probeflasche 3 im Bereich außerhalb des Magazins 1 in einen Schieber 24 eingesetzt, der mit einer Aufnahme 25 für die Probeflasche versehen ist und durch den Antrieb 22 etwa radial zum Magazin 1 so verschoben wird, dass die Probeflasche 3 in den Aufnahmeraum 10 des Magazins 1 gelangt. Anschließend wird der Schieber mittels des Antriebes 26 zurückgezogen. Auf diese Weise wird mit dem Schieber 24 jeweils eine Probeflasche 3 in den Aufnahmeraum 10 eingeschleust. Der Boden 18 des Magazins 1 wird jeweils so gedreht, dass der Einschleusebereich 19a zum Einschleusen der nächsten Probeflasche 3 frei ist. Der Boden 18 wird somit schrittweise gedreht.

Gelangt die Probeflasche 3 in den Ausschleusebereich 19b, gelangt die in Drehrichtung jeweils vordere Probeflasche 3 in Kontakt mit dem Verschlussbügel 20, welcher den Ausschleusebereich 19b vom Einschleusebereich 19a trennt. Der Verschlussbügel 20 weist auf seiner dem Ausschleusebereich 19b zugewandten Seite eine gekrümmte oder auch schräg liegende Führungsfläche 23 auf (Fig. 5), die dafür sorgt, dass die jeweils vordere Probeflasche 3 über diese Führungsfläche 23 aus dem Aufnahmeraum 10 ausgeschleust wird.

Die Führungsfläche 23 erstreckt sich etwa von der inneren Ringwand 12 aus bis an den Rand des Ausschleusebereiches 19b (Fig. 5) und liegt, in Achsrichtung des Magazins 1 gesehen, stumpfwinklig zur Ringwand 12. Dadurch werden die Probeflaschen 3 zuverlässig schräg nach außen zum und durch den Ausschleusebereich 19b geleitet.

Der Schieber 24 ist mit einem Schieberantrieb 26 antriebsverbunden, mit dem er aus der in Fig. 5 dargestellten Ausgangsposition mit der in die Aufnahme 25 eingesetzten Probeflasche 3 zur Barcode-Leseposition 21 transportiert werden kann, die sich vor dem Antrieb 22 befindet. Nach erfolgreicher Barcodeerfassung wird die Probeflasche 3 mittels der Hubeinheit 39 angehoben. In der angehobenen Position wird in die Probeflasche 3 eine (nicht dargestellte) Probeentnahmenadel eingestochen und eine repräsentative Milchprobe in die Probeflasche 3 injiziert. Anschließend wird die Probeflasche 3 abgesenkt.

Mit dem Antrieb 22 kann anschließend die gefüllte Probeflasche 3 in den Einschleusebereich 19a geschoben werden. Der Schieber 24 hat für den Durchtritt einer Kolbenstange des Antriebes 22 eine Bohrung 46 (Fig. 4), durch die die Kolbenstange bewegt werden kann, um die Probeflasche 3 aus der Aufnahme 25 des Schiebers 24 in den Einschleusebereich 19a zu verschieben. Sobald die Probeflasche 3 in den Aufnahmeraum 10 eingeschleust ist, wird die Kolbenstange des Antriebes 22 aus dem Schieber 24 herausgezogen und anschließend der Schieber 24 mit dem Schieberantrieb 26 in die Ausgangslage gemäß Fig. 4 zurückgefahren.

Die beiden Antriebe 22, 26 haben senkrecht zueinander liegende Antriebsrichtungen, die einen einfachen Transport der Probeflasche 3 ermöglichen.

Wie aus den Fig. 5 und 7 hervorgeht, ist der Schieber 24 in der Übernahmeposition unmittelbar benachbart zum Ausschleusebereich 19b angeordnet. Die Führungsfläche 23 des Verschlussbügels 20 ist so ausgebildet, dass sie bis nahe an den Schieber 24 reicht. Vorteilhaft ist die Führungsfläche 23 so angeordnet, dass sie mit nur geringem Abstand an die Innenwand der Aufnahme 25 des Schiebers 24 anschließt. Dadurch kann die ausgeschleuste Probeflasche 3 zuverlässig in die Aufnahme 25 des Schiebers 24 verschoben werden.

Die Identifikations/Abfüllposition 21 dient zum Erfassen des auf der Probeflasche 3 seitlich angebrachten Barcodes oder Transponders. Da die Probeflasche 3 mittels des Antriebes 40 um ihre Achse gedreht wird, lässt sich der am Mantel der Probeflasche 3 angebrachte Barcode einfach in eine Lage bringen, in der er vom Barcodeleser erfasst werden kann.

Die Probeflasche kann auch einen im Flaschenboden befindlichen Transponder aufweisen, der entsprechend erfasst wird.

Die äußere Ringwand 11 ist im Ein/Ausschleusebereich 19 mit einer entsprechenden Öffnung versehen, so dass die Probeflaschen 3 zuverlässig ein- bzw. ausgeschleust werden können.

Die innere Ringwand 12 kann beim Einschleusen der Probeflaschen 3 als Anschlag und Führung dienen, die dafür sorgt, dass die Probeflaschen 3 zuverlässig in den Aufnahmeraum 10 des Magazins 1 gelangen.

Bei der beschriebenen Ausführungsform werden die Probeflaschen radial ein- und ausgeschleust. Grundsätzlich ist es möglich, den Ein/Ausschleusebereich 19 auch so auszubilden, dass die Probeflaschen axial in den Aufnahmeraum 10 eingeschleust sowie aus dem Aufnahmeraum 10 ausgeschleust werden können. In diesem Falle können anstelle der Schieber 24 beispielhaft Greifer vorgesehen sein, welche die Probeflaschen von oben in den Aufnahmeraum 10 einsetzen bzw. aus ihm herausheben. Auch in diesem Falle ist der Ein/Ausschleusebereich 19 so gestaltet, dass der Einschleusebereich 19a vom Ausschleusebereich 19b getrennt ist. Daher ist es wie bei der beschriebenen Ausführungsform möglich, gleichzeitig Probeflaschen einzuschleusen und auszuschleusen.

Anstelle der beschriebenen Schieber können auch andere Aufnahmeeinrichtungen für die Probeflaschen 3 vorgesehen werden, beispielsweise Sternarme, deren Arme am radial äußeren Ende mit den entsprechenden Aufnahmen 25 für die Probeflaschen 3 versehen sind. Diese Sternarme sind dann so angeordnet, dass sie mit einem Arm dem Einschleusebereich 19a bzw. dem Ausschleusebereich 19b gegenüberliegen und nach Einschleusen bzw. Ausschleusen der jeweiligen Probeflasche so gedreht werden, dass der nächste Arm dem Einschleusebereich 19a bzw. dem Ausschleusebereich 19b gegenüberliegt.

Die beschriebene Einrichtung zeichnet sich insbesondere durch ihre einfache konstruktive Gestaltung aus. Sie hat nur ein geringes Gewicht und benötigt nur geringen Platzbedarf im Sammelfahrzeug. Das Ein- und Ausschleusen der Probeflaschen kann vollautomatisch durchgeführt werden. Das Magazin 1 der Einrichtung ist so ausgebildet, dass es kompatibel zu vorhandenen, in Milchlaboren eingesetzten Automatisierungssystemen ist.

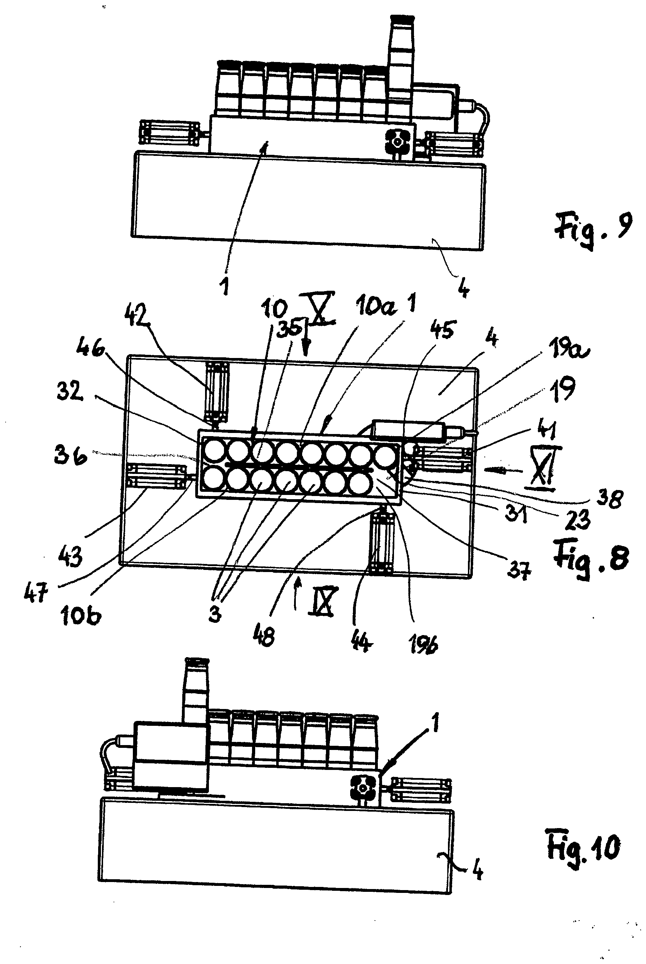

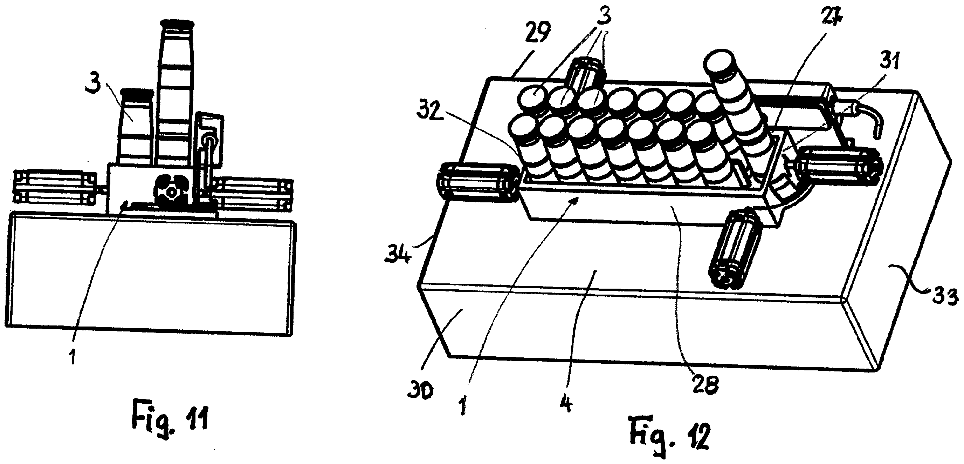

Bei der nicht erfindungsgemäßen Ausführungsform nach den Fig. 8 bis 12 hat das Magazin 1 Rechteckform. Es ist auf dem Träger 4 angeordnet, der beispielhaft ebenfalls rechteckigen Umriss hat. Dieses Ausführungsbeispiel zeigt, dass statt einer runden Anordnung auch eine xy-Anordnung der Probeflaschen 3 möglich ist.

Das Magazin 1 hat parallel zueinander liegende Längsseiten 27, 28, die parallel zu den Längsseiten 29, 30 des Trägers 4 verlaufen. Die Längsseiten 27, 28 bzw. 29, 30 sind durch rechtwinklig zu ihnen verlaufende Schmalseiten 31, 32 bzw. 33, 34 miteinander verbunden.

Im Unterschied zum Rundmagazin gemäß den Fig. 1 bis 7 sind die Seitenwände 27, 28, 31, 32 des Magazins 1 niedriger als die Probeflaschen 3. Sie stehen daher über die Seitenwände 27, 28, 31, 32 des Magazins 1 vor.

Der Aufnahmeraum 10 des Magazins 1 ist im Unterschied zur vorigen Ausführungsform langgestreckt ausgebildet und besteht aus zwei parallel zueinander liegenden Aufnahmebereichen 10a, 10b, die durch eine Trennwand 35 über den größten Teil ihrer Länge voneinander getrennt sind. Die Trennwand 35 endet mit Abstand zu den Schmalseiten 31, 32 des Magazins 1 (Fig. 8). Dadurch werden im Bereich dieser Schmalseiten 31, 32 Übergangsbereiche 36, 37 gebildet, über die die Probeflaschen 3 vom einen Abschnitt 10a in den anderen Abschnitt 10b des Aufnahmeraumes 10 gelangen können.

Im Übergangsbereich 37 befindet sich der Ein/Ausschleusebereich 19 für die Probeflaschen 3. Er hat den Einschleusebereich 19a (Fig. 8), der durch ein Sperrelement 38 vom Ausschleusebereich 19b getrennt ist. Das Sperrelement 38 hat die Führungsfläche 23, über die die jeweilige Probeflasche 3 in den Ausschleusebereich 19b gebracht wird. Hier wird die Probeflasche 3 - im Unterschied zur vorigen Ausführungsform - axial dem Aufnahmeraum 10 entnommen. Das Sperrelement 38 sorgt dafür, dass die Probeflasche nicht aus dem Abschnitt 10b in den Abschnitt 10a des Aufnahmeraumes 8 gelangen kann.

Zum Ein- und Ausschleusen sind bei dieser Ausführungsform vier Antriebe 41 bis 44 vorgesehen, um nacheinander alle vorhandenen Probeflaschen 3 in die Barcodelese- und Abfüllposition zu transportieren. Die Antriebe 41 bis 44 sind vorteilhaft jeweils Kolben-Zylinder-Einheiten, von denen benachbarte Antriebe jeweils rechtwinklig zueinander liegen (Fig. 8). Mit dem Antrieb 43 wird die untere Reihe der Probeflaschen 3 nach rechts in Richtung P verschoben. Dadurch wird ein Platz in der unteren Reihe frei, in den der Antrieb 42 die linke Probeflasche 3 der oberen Reihe schiebt. Mit dem Antrieb 41 kann dann die obere Reihe an Probeflaschen 3 entgegen Richtung P verschoben werden, wodurch ein in Verschieberichtung P vorderer Platz frei wird. In den frei gewordenen Platz in der oberen Reihe kann mit dem Antrieb 44 die letzte Probeflasche 3 in der unteren Reihe in die Abfüllposition am Einschleusebereich 19a verschoben werden.

In den Längsseiten 27, 27 und den Schmalseiten 31, 32 des Magazins 1 befinden sich Öffnungen für den Durchtritt von Kolbenstangen 45 bis 48 der Antriebe 41 bis 44 (Fig. 8).

Anstelle der erwähnten Kolben-Zylinder-Einheiten können als Antriebe 41 bis 44 zum Transport der Probeflaschen 3 auch z.B. Transportbänder eingesetzt werden.

Bei den beschriebenen Ausführungsformen werden die Probeflaschen 3 manuell in das Magazin 1 eingesetzt bzw. entnommen. Es ist auch denkbar, zum Befüllen oder Entnehmen der Probeflaschen 3 ein Wechselmagazin zu verwenden, das mit entsprechenden Öffnungen für die Antriebe 41 bis 44 aufweist. Außerdem ist mindestens eine Öffnung im Boden des Magazins für die Dreh- und/oder Hubeinrichtung an der Abfüllposition vorgesehen.

## Patentansprüche

1. Einrichtung zum Sammeln von Milchprobenflaschen (3), mit wenigstens einem Magazin (1), das mindestens einen Aufnahmeraum (10) für die Milchprobeflaschen (3) aufweist, der mit wenigstens einem Einschleusebereich (19a) und wenigstens einem Ausschleusebereich (19b) für die Milchprobeflaschen (3) versehen ist, wobei der Einschleusebereich (19a) gegen den Ausschleusebereich (19b) gesperrt ist, **dadurch gekennzeichnet, dass** der Einschleusebereich (19a) vom Ausschleusebereich (19b) durch einen Verschlussbügel (20) getrennt ist, der mit einer Seite den Einschleusebereich (19a) begrenzt und auf seiner dem Ausschleusebereich (19b) zugewandten Seite eine gekrümmte oder schräg liegende Führungsfläche (23) aufweist, über die die Milchprobeflasche (3) aus dem Aufnahmeraum (109 geschleust wird.

2. Einrichtung nach Anspruch 1,
**dadurch gekennzeichnet, dass** der Aufnahmeraum (10) von zwei koaxialen Ringwänden (11, 12) begrenzt ist.

3. Einrichtung nach Anspruch 1 oder 2,
**dadurch gekennzeichnet, dass** der Auslass (19b) in der äußeren Ringwand (11) vorgesehen ist.

4. Einrichtung nach einem der Ansprüche 1 bis 3,
**dadurch gekennzeichnet, dass** der Einschleusebereich (19a) in der äußeren Ringwand (11) vorgesehen ist.

5. Einrichtung nach einem der Ansprüche 1 bis 4,
**dadurch gekennzeichnet, dass** dem Magazin (1) wenigstens ein Transportsystem (2) zugeordnet ist, um die Milchprobeflaschen (3) zumindest in den Aufnahmeraum (10) einzuschleusen.

6. Einrichtung nach einem der Ansprüche 1 bis 5,
**dadurch gekennzeichnet, dass** das Transportsystem (2) einen Schieber (24) zum Einschleusen und einen Schieber (24) zum Abtransport der ausgeschleusten Milchprobeflaschen (3) aufweist.

7. Einrichtung nach einem der Ansprüche 1 bis 6,
**dadurch gekennzeichnet, dass** das Magazin (1) mit einem Antrieb (5, 7) zum Transport der Milchprobeflaschen (3) im Aufnahmeraum (10) versehen ist.

## Claims

1. Device for collecting milk sample bottles (3), comprising at least one magazine (1) which has at least one receiving space (10) for the milk sample bottles (3), which is provided with at least one loading region (19a) and at least one unloading region (19b) for the milk sample bottles (3), wherein the loading region (19a) is blocked against the unloading region (19b), **characterized in that** the loading region (19a) is separated from the unloading region (19b) by a locking clip (20) which delimits the loading region (19a) with one side and has a curved or oblique guide surface (23) on its side facing the unloading region (19b) via which the milk sample bottle (3) is discharged from the receiving space (10).

2. Device according to Claim 1, **characterized in that** the receiving space (10) is delimited by two coaxial annular walls (11, 12).

3. Device according to Claim 1 or 2, **characterized in that** the outlet (19b) is provided in the outer annular wall (11).

4. Device according to one of Claims 1 to 3, **characterized in that** the loading region (19a) is provided in the outer annular wall (11).

5. Device according to one of Claims 1 to 4, **characterized in that** at least one transport system (2) is assigned to the magazine (1) in order to load the milk sample bottles (3) at least into the receiving space (10).

6. Device according to one of Claims 1 to 5, **characterized in that** the transport system (2) has a slider (24) for loading and a slider (24) for removing the unloaded milk sample bottles (3).

7. Device according to one of Claims 1 to 6, **characterized in that** the magazine (1) is provided with a drive (5, 7) for transporting the milk sample bottles (3) in the receiving space (10).

## Revendications

1. Dispositif de collecte de bouteilles d'échantillons de lait (3) avec au moins un magasin (1), qui comporte au moins un compartiment de réception (10) pour les bouteilles d'échantillons de lait (3), qui est doté au moins d'une zone d'insertion (19a) et au moins d'une zone d'évacuation (19b) pour les bouteilles d'échantillons de lait (3), sachant que la zone d'insertion (19a) est fermée vers la zone d'évacuation (19b),
**caractérisé en ce que** la zone d'insertion (19a) est séparée de la zone d'évacuation (19b) par un étrier de fermeture (20), qui limite avec un côté la zone d'insertion (19a) et comporte sur son côté tourné vers la zone d'évacuation (19b) une surface de guidage (23) courbée ou inclinée sur laquelle les bouteilles d'échantillons de lait (3) sont évacuées du compartiment de réception (10).

2. Dispositif selon la revendication 1,
**caractérisé en ce que** le compartiment de réception (10) est limité par deux parois annulaires (11, 12) coaxiales.

3. Dispositif selon la revendication 1 ou 2,
**caractérisé en ce que** l'évacuation (19b) est prévue dans la paroi annulaire extérieure (11).

4. Dispositif selon l'une quelconque des revendications 1 à 3,
**caractérisé en ce que** la zone d'insertion (19a) est prévue dans la paroi annulaire extérieure (11).

5. Dispositif selon l'une quelconque des revendications 1 à 4,
**caractérisé en ce que** au moins un système de transport (2) est attribué au magasin (1) pour insérer les bouteilles d'échantillons de lait (3) au moins dans le compartiment de réception (10).

6. Dispositif selon l'une quelconque des revendications 1 à 5,
**caractérisé en ce que** le système de transport (2) comporte un coulisseau (24) pour l'insertion et un coulisseau (24) pour l'enlèvement des bouteilles d'échantillons de lait (3) évacuées.

7. Dispositif selon l'une quelconque des revendications 1 à 6,
**caractérisé en ce que** le magasin (1) est doté d'un système d'entraînement (5, 7) pour le transport des bouteilles d'échantillons de lait (3) dans le compartiment de réception (10).
